(19) **Europäisches Patentamt / European Patent Office / Office européen des brevets**

(11) **EP 2 943 816 B1**

(12) **EUROPEAN PATENT SPECIFICATION**

(45) Date of publication and mention
of the grant of the patent:
**17.04.2019 Bulletin 2019/16**

(51) Int Cl.:
*G01V 1/38* (2006.01)   *G01V 1/28* (2006.01)
*G06F 19/00* (2018.01)   *G01V 99/00* (2009.01)
*G01V 1/30* (2006.01)

(21) Application number: **14738142.0**

(22) Date of filing: **10.01.2014**

(86) International application number:
**PCT/US2014/010985**

(87) International publication number:
**WO 2014/110330 (17.07.2014 Gazette 2014/29)**

(54) **PROCESSING SURVEY DATA FOR DETERMINING A WAVEFIELD**

VERARBEITUNG VON VERMESSUNGSDATEN ZUR BESTIMMUNG EINES WELLENFELDES

TRAITEMENT DE DONNÉES DE PROSPECTION POUR DÉTERMINER UN CHAMP D'ONDES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.01.2013 US 201361751689 P
09.01.2014 US 201414151594**

(43) Date of publication of application:
**18.11.2015 Bulletin 2015/47**

(73) Proprietors:
• **Westerngeco LLC
Houston, Texas 77042 (US)**
Designated Contracting States:
**IS**
• **WesternGeco Seismic Holdings Limited
Road Town
Tortola (VG)**

(72) Inventor: **KITCHENSIDE, Philip, W.
Gatwick
Sussex RH6 0NZ (GB)**

(74) Representative: **Schlumberger Intellectual
Property Department
Parkstraat 83
2514 JG Den Haag (NL)**

(56) References cited:
**US-A1- 2006 081 414    US-A1- 2008 008 039
US-A1- 2010 186 950    US-A1- 2010 186 950
US-A1- 2011 090 760    US-B2- 7 508 736**

• **Y Hollander ET AL: "Seismic Data Interpolation by Orthogonal Matching Pursuit", , 7 June 2012 (2012-06-07), XP055277140, Retrieved from the Internet: URL:https://www.pdgm.com/resource-library/ articles-and-papers/2012/seismic-data-inte rpolation-by-orthogonal-matching/ [retrieved on 2016-06-01]**
• **TROPP J A ET AL: "Signal recovery from random measurements via orthogonal matching pursuit", IEEE TRANSACTIONS ON INFORMATION THEORY, IEEE PRESS, USA, vol. 53, no. 12, 1 December 2007 (2007-12-01), pages 4655-4666, XP007909409, ISSN: 0018-9448, DOI: 10.1109/TIT.2007.909108**
• **ÖZBEK ET AL: "Crossline wavefield reconstruction from multicomponent streamer data: Part 2 ? Joint interpolation and 3D up/down separation by generalized matching pursuit", GEOPHYSICS, SOCIETY OF EXPLORATION GEOPHYSICISTS, US, vol. 75, no. 6, SUPPL, 1 November 2010 (2010-11-01), pages WB69-WB85, XP001561933, ISSN: 0016-8033, DOI: 10.1190/1.34973**
• **MASSIMILIANO VASSALLO ET AL: "Effective seismic interference elimination enabled by multi-component data from marine acquisitions", SEG TECHNICAL PROGRAM EXPANDED ABSTRACTS 2012, 1 September 2012 (2012-09-01), pages 1-5, XP055277141, DOI: 10.1190/segam2012-1185.1**

**(Cont. next page)**

• JIAN WANG ET AL: "Generalized Orthogonal Matching Pursuit", IEEE TRANSACTIONS ON SIGNAL PROCESSING, IEEE SERVICE CENTER, NEW YORK, NY, US, vol. 60, no. 12, 1 December 2012 (2012-12-01), pages 6202-6216, XP011482622, ISSN: 1053-587X, DOI: 10.1109/TSP.2012.2218810

• DEANNA NEEDELL ET AL: "Signal Recovery From Incomplete and Inaccurate Measurements Via Regularized Orthogonal Matching Pursuit", IEEE JOURNAL OF SELECTED TOPICS IN SIGNAL PROCESSING, IEEE, US, vol. 4, no. 2, 1 April 2010 (2010-04-01), pages 310-316, XP011327609, ISSN: 1932-4553, DOI: 10.1109/JSTSP.2010.2042412

**Description**

Background

Survey data can be collected and processed to produce a representation (*e.g.* image) of a subsurface structure. In some implementations, survey data includes seismic survey data collected using seismic survey equipment. The seismic survey equipment includes one or more seismic sources that are activated to produce seismic wavefields propagated into the subsurface structure. A part of the seismic wavefields is reflected from the subsurface structure and detected by seismic receivers that are part of the survey equipment.

Seismic surveying can be performed in a marine environment. An issue associated with marine seismic surveying is the presence of ghost data. Ghost data refer to data in measurement data resulting from reflections from an air-water interface of the marine environment. A seismic wavefield generated by a seismic source is propagated generally downwardly into the subsurface structure. A reflected seismic wavefield (that is in response to the seismic wavefield propagated by the seismic source) propagates generally upwardly toward an arrangement of seismic receivers. In the marine environment, where receivers are generally positioned beneath the water surface, the seismic wavefield reflected from the subsurface structure continues to propagate upward past the receivers towards the air-water interface, where the seismic wavefield is reflected back downwardly.

This reflected, generally downwardly traveling seismic wavefield from the air-water interface is detected by the seismic receivers as ghost data, which appears in measurement data collected by the seismic receivers. The presence of ghost data can result in reduced accuracy when generating a representation of the subsurface structure based on the measurement data.

Y Hollander et al., "Seismic Data Interpolation by Orthogonal Matching Pursuit," 2012, describes a multidimensional interpolation method for regularization of seismic data, which uses an orthogonal matching pursuit (OMP) algorithm.

US 2010/0186950 refers to a method for identifying geologic features from geophysical data, by taking a curvelet transform of the data.

Joel A Tropp et al., "Single Recovery from Random Measurements Via Orthogonal Matching Pursuit," 2007, describes a greedy algorithm called Orthogonal Matching Pursuit (OMP) that can recover a signal from nonzero entries given random linear measurements of a signal.

Summary

The invention relates to a computer-implemented method according to claim 1, a computer system according to claim 9 and an article according to claim 10.

Other or alternative features will become apparent from the following description, from the drawings and from the claims.

Brief Description Of The Drawings

Some embodiments are described with respect to the following figures.

Figs. 1 and 2 are schematic diagrams of an example marine survey arrangements for collecting survey data regarding a subsurface structure.

Fig. 3 is a flow diagram of a wavefield estimation process according to some implementations.

Fig. 4 is a block diagram of an example control system that includes a wavefield estimation module according to some implementations.

Detailed Description

It will also be understood that, the terms first, second, etc., are used to distinguish one element from another, and should not be construed to imply any ordering of the elements. For example, a first element or step could be termed a second element or step, and, similarly, a second element or step could be termed a first element or step.

As used herein, the singular forms "a", "an" and "the" are intended to include the plural forms as well, unless the context clearly indicates otherwise. It will also be understood that the term "and/or" as used herein refers to and encompasses any possible combination of one or more of the associated listed items. It will be further understood that the terms "includes," "including," "comprises," "comprising," "has," and/or "having" when used herein, specify the presence of stated features, integers, steps, operations, elements, and/or components, but do not preclude the presence or addition of one or more other features, integers, steps, operations, elements, components, and/or groups thereof.

As used herein, the term "if" may be construed to mean "when" or "upon" or "in response to determining" or "in response to detecting," depending on the context. Similarly, the phrase "if it is determined" or "if [a stated condition or event] is detected" may be construed to mean "upon determining" or "in response to determining" or "upon detecting [the stated condition or event]" or "in response to detecting [the stated condition or event]," depending on the context.

In the ensuing discussion, reference is made to performing deghosting according to some implementations in a marine survey environment. Note, however, that techniques or mechanisms according to some implementations can also be applied in land-based survey environments or wellbore-based survey environments in which ghost data can appear in measured survey data, as measured by one or more survey receivers. In addition, techniques or mechanisms according to some implementations can be applied in other contexts, such as based on data collected by cables or streamers that are in slanted acquisition profiles (cables or streamers including survey receivers and/or survey sources are slanted rather than horizontal) and/or towed in turning configurations (e.g. data acquired by survey arrangements that shoot in turns or that perform coil-based acquisition).

Moreover, although reference is made to performing surveying to characterize a subsurface structure, techniques or mechanisms according to some implementations can also be applied to perform surveys of other structures, such as human tissue, a mechanical structure, plant tissue, animal tissue, a solid volume, a substantially solid volume, a liquid volume, a gas volume, a plasma volume, a volume of space near and/or outside the atmosphere of a planet, asteroid, comet, moon, or other body, and so forth. In addition, the following describes seismic sources and seismic receivers that are part of seismic survey equipment. In other implementations, other types of survey equipment can be used, which can include other types of survey sources and survey receivers.

Deghosting attempts to remove ghost data from measured survey data. Ghost data (or ghost reflections) can result in gaps or notches in the amplitude spectra of recorded survey data, where the notches can reduce the useful bandwidth of the survey data. Generally, deghosting is applied to the total wavefield (the sum of the upgoing and downgoing wavefields); the deghosting produces the upgoing portion (the portion reflected from a subsurface structure) of the total wavefield. In a deghosting procedure, a given component of the recorded total wavefield can be expressed mathematically as the combination of a ghost operator (which corresponds to the given component) and the upgoing wavefield.

Generally, an upgoing wavefield refers to a wavefield that travels in a direction that has at least one directional component that is in the vertical up direction. Similarly, a downgoing wavefield refers to a wavefield that travels in a direction that has at least one directional component that is in the vertical down direction.

In accordance with some implementations, techniques or mechanisms are provided to determine a target wavefield that can be used for performing deghosting or for some other operation. The determined target wavefield can be the upgoing wavefield (or any other target wavefield). The target wavefield can be determined by using an iterative process that includes an orthogonal generalized matching pursuits (OGMP) technique (discussed further below).

Although reference is made to using the OGMP technique for determining a target wavefield for purposes of deghosting, it is noted that the OGMP technique can be applied for performing other operations, such as to perform crossline interpolation of survey data. In a survey arrangement, such as a towed marine survey arrangement or land-based survey arrangement, multiple lines (*e.g.* streamers or arrays) of survey receivers can be provided. Although the spacing between survey receivers along a line can be relatively small (to provide finer sampling of survey data along the direction of the lines), the spacing between the lines can be relatively coarse, which provides for coarse crossline survey receiver separations. In other words, in the crossline direction (direction that is generally perpendicular to the direction of the lines), coarser sampling of survey data is achieved. To provide finer sampling of survey data in the crossline direction, crossline interpolation can be performed to produce survey data at interpolated points (points where survey receivers do not exist) between the lines.

The OGMP technique according to some implementations can also be applied for performing other types of operations.

As discussed in further detail below, the OGMP technique according to some implementations uses dictionary elements that are vectors whose elements are the product of a ghost operator and a complex exponential, in the context of deghosting. In other contexts, a dictionary element can be a vector having elements that are the product of an operator and a complex exponential. A dictionary element represents a part of a total wavefield at the locations of the respective survey receivers.

The OGMP technique applies orthogonal matching pursuits to derive an approximation to components of a measured multicomponent wavefield, in the form of a weighted sum (series expansion), or other aggregate, of dictionary elements. A matching pursuits procedure uses the theory of acoustic wave propagation to formulate mapping of a target wavefield (*e.g.* upgoing wavefield), which is the desired output, onto components of the measured multicomponent wavefield. The matching pursuits procedure is an iterative process that iteratively determines an improved-fit (*e.g.* best-fit) target wavefield that can be mapped by ghost operators to respective components. The resulting target wavefield can be output at an arbitrary location (even at a location where a survey receiver does not exist), which allows for performing crossline interpolation as discussed above.

The target wavefield (*e.g.* an upgoing wavefield) can be estimated by omitting the ghost operators of the dictionary elements from the weighted sum approximation. The estimated (interpolated) downgoing wavefield and hence also the estimated (interpolated) total wavefield can be obtained by modifying expansion coefficients of the weighted sum approximation.

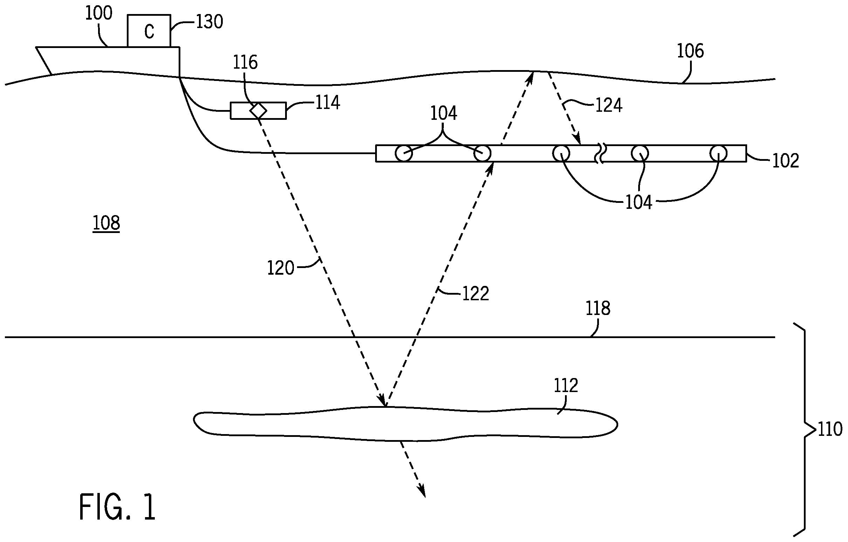

Fig. 1 illustrates an example marine survey arrangement that includes a marine vessel 100 for towing a streamer 102 that includes seismic receivers 104. In addition, the marine vessel 100 (or a different marine vessel) can tow a seismic source assembly 114, which has at least one seismic source 116.

The marine vessel 100 tows the streamer 102 and seismic source assembly 114 through a body of water 108 above a bottom surface 118 (*e.g.* seafloor). A subsurface structure 110 is located below the bottom surface 118, and the subsurface structure 110 includes at least one subsurface element 112 of interest. Examples of the subsurface element 112 can include a hydrocarbon-bearing reservoir, a freshwater aquifer, a gas injection zone, or other subsurface element of interest.

Fig. 1 further depicts an arrow 120 that represents a seismic wavefield generated by the seismic source 116 and traveling generally downwardly into the subsurface structure 110. A portion of the seismic wavefield 120 is reflected from the subsurface structure 110, and travels generally upwardly (as indicated by arrow 122) toward the streamer 102. The upgoing seismic wavefield (122) is detected by the seismic receivers 104 of the streamer 102.

The upgoing seismic wavefield (122) continues to travel upwardly until the wavefield reaches the air-water interface (106), where the seismic wavefield is reflected generally downwardly (as indicated by arrow 124). The reflected downgoing seismic wavefield (124) is also detected at the seismic receivers 104, which causes ghost data to appear in the measurement data collected by the seismic receivers 104. The reflected downgoing wavefield interacts with the upgoing wavefield, which causes constructive and destructive interference that results in the ghost data. This interference is detrimental to the seismic data since it causes amplitude and phase distortions and can result in total elimination of frequencies near the so-called ghost notch frequency.

For simplicity, Fig. 1 depicts an example that includes just one instance of a source downgoing wavefield 120, a reflected upgoing wavefield 122, and a reflected downgoing wavefield 124. In an actual survey environment, there can be many instances of the various downgoing and upgoing wavefields. Also, in other examples, the survey arrangement can include more than one seismic source 116, in which case there can be additional instances of the various wavefields.

Fig. 1 further depicts a control system 130 deployed at the marine vessel 100. The control system 130 can be used to control activation of the seismic source assembly 114. The control system 130 can also receive measurement data collected by the seismic receivers 104. In some examples, the control system 130 is able to process the collected measurement data, such as to develop an image or other representation of the subsurface structure 110. In other examples, the collected measurement data from the seismic receivers 104 can be communicated to a remote system for further processing. The processing performed by the control system 130 or by another system can further include deghosting, crossline interpolation, and so forth, according to some implementations. Deghosting measured survey data refers to removing or mitigating an effect of reflection from the air-water interface 106 (or other type of interface). Crossline interpolation refers to producing interpolated survey data along the crossline direction (direction generally perpendicular to the direction of the streamer 102) at locations where survey receivers do not exist.

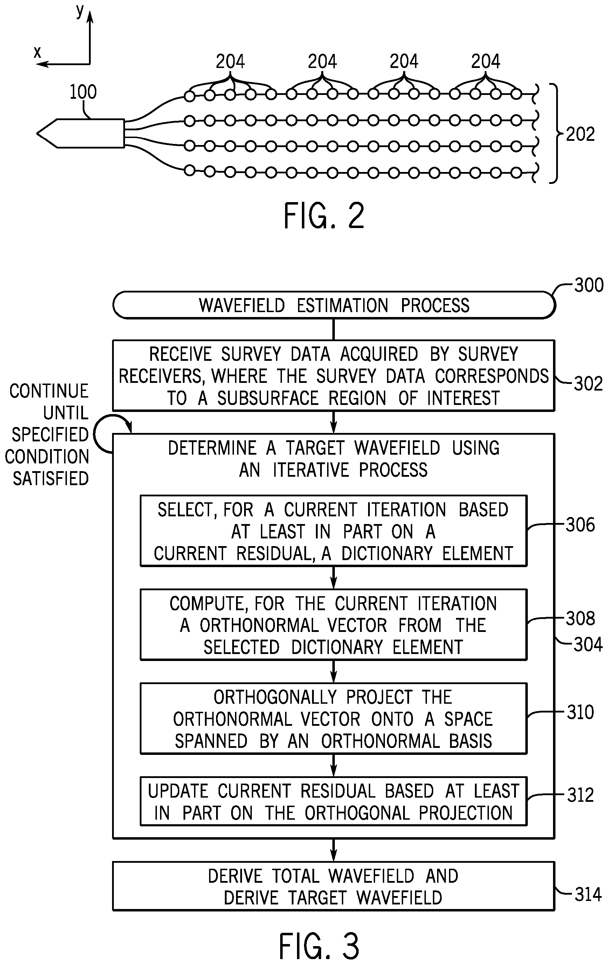

Fig. 2 is a top schematic view of another example marine survey arrangement that includes the marine vessel 100, which can tow multiple streamers 202. The streamers 202 include respective collections of survey receivers 204. The survey receivers 204 along a streamer 202 have a relatively fine inter-receiver spacing in the in-line direction (x direction shown in Fig. 2). However, a coarser spacing is provided between the streamers 202 in the crossline direction (*y* direction in Fig. 2). Crossline interpolation can be applied to interpolate survey data at intermediate points between the streamers 202 using the OGMP technique according to some implementations.

Fig. 3 is a flow diagram of a wavefield estimation process 300 according to some implementations that can be used for estimating a target wavefield for use in various applications, including deghosting, crossline interpolation and so forth. The process 300 can be performed by the control system 130 shown in Fig. 1, or by a remote computer system.

The process 300 receives (at 302) survey data acquired by survey receivers (*e.g.* 104 or 204), where the survey data corresponds to a subsurface region of interest. The process then determines (at 304) the target wavefield by using an iterative process that iterative performs tasks 306-312 performing until a specified condition (stopping condition) is satisfied.

The iterative determining process (304) includes selecting (at 306), for a current iteration based at least in part on a current residual representing an approximation error, a dictionary element that includes a representation of at least one portion of the wavefield, where the selected dictionary element is determined from the received survey data. In some examples, the residual is the sum of the errors between a measured component and the corresponding modeled estimate. As discussed further below, the residual is used for converging the iterative determining process, by using the residual as part of the stopping condition of the iterative determining process (304). In some implementations, selecting the dictionary element is according to a criterion that reduces a residual for a next iteration.

As noted above, a dictionary element, expressed as Eq. 5 below in some examples, is a vector including multiple elements, where an element in the vector is the product of a ghost operator and a complex exponential, for example. A dictionary element represents part of a total wavefield at the locations of the respective survey receivers.

The iterative determining process (304) further computes (at 308), for the current iteration, a data structure (*e.g.* orthonormal vector) from the selected dictionary element. An example orthonormal vector is expressed as Eq. 1 below. The orthonormal vectors collectively provide an orthonormal basis of a space that is spanned by a dictionary element.

The iterative determining process (304) then orthogonally projects (at 310) the orthonormal vector onto a space spanned by the orthonormal basis. An example of such orthogonal projection is represented as Eq. 2 below.

Next, the iterative determining process (304) updates (at 312) the current residual based at least in part on the orthogonal projection. The updated current residual represents an updated approximation error of the wavefield estimation process 300. An example of updating the current residual is expressed by Eq. 3 below.

As the iterative determining process (304) proceeds through multiple iterations, the residual is continually updated, and eventually will reach a sufficiently low value (*e.g.* less than a predetermined threshold). The current residual (as computed at 312) being less than the predetermined threshold is an example of a stopping condition that causes the iterative determining process (304) to stop.

Once the residual is small enough, the total wavefield can be derived (at 314) by computing a weighted sum (or other aggregation) of dictionary elements, such as expressed by Eq. 4 below. The target wavefield (*e.g.* upgoing wavefield when performing deghosting) can be derived from the total wavefield by omitting the ghost operators of the dictionary elements.

The measured survey data acquired by survey receivers (*e.g.* 104, 204) can include components in multiple directions, including the horizontal directions such as the *x* and y directions, as well as the vertical direction, which can be referred to as the z direction. The measured survey data can include particle motion data, including velocities, accelerations, and so forth.

Fig. 3 depicts an example flow for an OGMP technique, which iteratively determines an improved-fit target wavefield that can be mapped by ghost operators to each recorded component. In some conditions, the spatial bandwidth within which a signal can be reconstructed is increased by a factor equal to the number of independently filtered versions of the signal. The ghost operators of the dictionary elements perform the filtering.

An approximation for the measured $P$, $V_y$, $V_z$ (pressure and particle velocity) components of the total wavefield may be derived in the form of a linear sum of complex exponentials (indexed by spatial wavenumber), each multiplied by the respective ghost operator, such as expressed by Eq. 4 below.

The following describes a difference between a matching pursuits procedure and an orthogonal matching pursuits procedure. For illustrative purposes, assume that matching pursuits is being used to approximate a function using a weighted sum of basis functions (*e.g.* dictionary elements $d_i$) that are selected from a larger dictionary of such elements. At each iteration, the matching pursuits procedure selects the element from the dictionary giving the largest absolute projection onto the current residual. The projection gives the value of an expansion coefficient, and hence the contribution of the element to the approximation. The residual is then updated by subtracting the contribution. The matching pursuits procedure then proceeds to the next iteration.

The rationale of the orthogonal matching pursuits procedure is that although the matching pursuits procedure will give a residual that eventually reduces to zero or other low value, the residual at each iteration is not the smallest obtainable with the set dictionary elements so far selected at the current and previous iterations. To improve upon matching pursuits, the orthogonal matching pursuits procedure forms an orthonormal basis out of the selected dictionary elements and derives an expansion in terms of this new orthonormal basis (which is according to the orthonormal vectors discussed above). At a given iteration, the approximation computed using the orthogonal matching pursuits procedure is then the orthogonal projection of the desired function onto the space spanned by the orthonormal basis. The residual is orthogonal (perpendicular) to this space and is therefore a minimum. In some implementations, the orthonormal basis may be computed using a Gram-Schmidt algorithm; in other examples, other techniques for forming the orthonormal basis can be used.

The orthonormal vectors that make up the orthonormal basis can be denoted by *u*. In iteration *n*+1, the vector ($u_n$) added to the orthonormal basis is given by:

$$u_n = d_n - \sum_{i=0}^{n-1} <d_n, u_i> u_i. \qquad \text{(Eq. 1)}$$

In the foregoing, $d_n$ represents a dictionary element as expressed by Eq. 5 below. For example, after three iterations, the following three respective orthonormal vectors are constructed:

$$u_0 = d_0$$

$$u_1 = d_1 - < d_1, u_0 > u_0$$

$$u_2 = d_2 - < d_2, u_1 > u_1 - < d_2, u_0 > u_0$$

In general, the orthonormal vector $u$ for a current iteration is orthogonal to previous orthonormal vectors $u$'s computed in previous iterations. The orthonormal vectors $u$'s computed for the multiple iterations are included in an orthonormal basis of the space spanned by the dictionary elements $d_j$. For a given iteration, the current $u$ is projected onto the current residual, and the residual for the subsequent iteration is computed. The projection gives the coefficient $b_i$ of $u_i$ from

$$R^i f = < R^i f, u_i > u_i + R^{i+1} f = b_i u_i + R^{i+1} f, \qquad \text{(Eq. 2)}$$

where the updated residual $R^{i+1}$ is used to select the next orthonormal vector from the dictionary ($d_j$). The criterion used to select a dictionary element $d_j$ is that it maximizes

$$|< R^{i+1} f, d_k >|, \qquad \text{(Eq. 3)}$$

where the index $k$ ranges over the entire dictionary (i.e. all dictionary elements). When the residual is small enough, the expansion in terms of the $d_i$ is recovered by back substitution such that the following total wavefield $P_T$ is derived:

$$P_T = \sum_i b_i u_i = \sum_i a_i d_i. \qquad \text{(Eq. 4)}$$

Eq. 4 expresses the total wavefield as a weighted sum of dictionary elements, $\sum_i a_i d_i,$ where the weights are represented by coefficients $a_i$. The foregoing weighted sum can also be equivalently computed by $\sum_i b_i u_i,$ which is the weighted sum of orthonormal vectors derived in the iterative determining process (304) of Fig. 3. The coefficients $a_i$ are numerically derived from the coefficients $b_i$, where each $b_i$ is equal to the projection of $u_i$ onto the residual $R^i f$ in Eq. 2.

The target wavefield (*e.g.* an upgoing wavefield) can be estimated from the total wavefield of Eq. 4 by omitting the ghost operators (*see* Eq. 5 below) of the dictionary elements from the weighted sum. In other words, estimating the upgoing wavefield can be performed by using a modified version of Eq. 4, in which $d_i$ is replaced with elements without the ghost operators $G_P$, $G_Y$, and $G_Z$ in Eq. 5.

The OGMP technique can be applied to dictionary elements ($\underline{d}_j$) that are finite-dimensional vectors constructed out of the products of complex exponential functions and ghost operators. The vector elements of the $\underline{d}_j$ are the values of these products at survey receiver locations.

$$d_j = \begin{bmatrix} G_P(k, f, z)\underline{d}(k) \\ G_Y(k, f, z)\underline{d}(k) \\ G_Z(k, f, z)\underline{d}(k) \end{bmatrix}_{k=k_j} \qquad \text{(Eq. 5)}$$

In Eq. 5, $j$ indexes a dictionary element, $k$ is a spatial wavenumber, $f$ is frequency, and $z$ is the streamer depth (in the vertical direction) that is used to define the ghost operators $G_P$, $G_Y$, and $G_Z$. The suffixes $P$, $Y$, $Z$ denote the different components of the multi-component wavefield.

The $\underline{d(k)}$ elements in Eq. 5 are vectors whose components are the values of the complex exponential function:

$$d(k) = e^{ik.x}, \qquad \text{(Eq. 6)}$$

which has spatial wavenumber $k$ and spatial coordinate $x$, evaluated at the survey receiver locations $x_i$. If the input data is recorded at $NY$ survey receivers, where three components are used, the vectors $d_j$ have length $3NY$. For example, for the example case $NY = 2$, the OGMP dictionary element corresponding to the wavenumber $k_j$ would be the vector

$$d_j = \begin{bmatrix} G_P(k_j, f, z)e^{ik_j x_0} \\ G_P(k_j, f, z)e^{ik_j x_1} \\ G_Y(k_j, f, z)e^{ik_j x_0} \\ G_Y(k_j, f, z)e^{ik_j x_1} \\ G_Z(k_j, f, z)e^{ik_j x_1} \\ G_Z(k_j, f, z)e^{ik_j x_1} \end{bmatrix}, \qquad \text{(Eq. 7)}$$

wherein in the most general case $k$ and $x$ are two-dimensional vectors (*i.e.* $(k_x, k_y)$ and $(x, y)$ respectively for survey receivers located on a two-dimensional surface). However, the dictionary elements can be placed in the one-dimensional form of $d_j$ above.

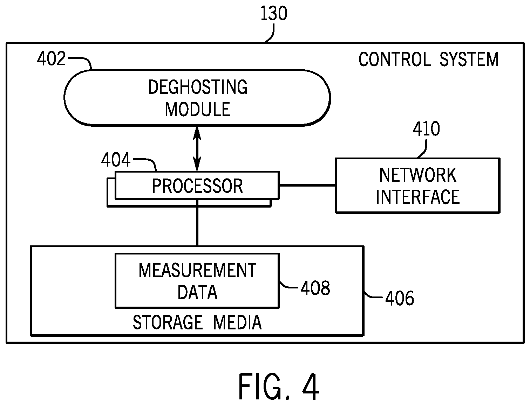

Fig. 4 illustrates an example control system 130 according to some implementations. The control system 130 includes a wavefield estimation module 402 for performing a wavefield estimation process, such as according to Fig. 3. The wavefield estimation module 402 can be implemented as machine-readable instructions executable on one or multiple processors 404. The control system 130 can be implemented with a computer system, or with a distributed arrangement of computer systems. A processor can include a microprocessor, microcontroller system, processor module or subsystem, programmable integrated circuit, programmable gate array, or another control or computing device.

The processor(s) 404 is (are) connected to a storage medium (or storage media) 406, which can store measurement data 408 collected by the survey receivers 104 or 204 depicted in Fig. 1 or 2. The control system 130 also includes a network interface 410 to allow the control system 130 to communicate with another system, such as with the streamer 102 or 202 to collect the measurement data, or with another system that communicates the measurement data to the control system 130.

The storage medium (or storage media) 406 can be implemented as one or more non-transitory computer-readable or machine-readable storage media. The storage media can include different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy and removable disks; other magnetic media including tape; optical media such as compact disks (CDs) or digital video disks (DVDs); or other types of storage devices. Note that the instructions discussed above can be provided on one computer-readable or machine-readable storage medium, or alternatively, can be provided on multiple computer-readable or machine-readable storage media distributed in a large system having possibly plural nodes. Such computer-readable or machine-readable storage medium or media is (are) considered to be part of an article (or article of manufacture). An article or article of manufacture can refer to any manufactured single component or multiple components. The storage medium or media can be located either in the machine running the machine-readable instructions, or located at a remote site from which machine-readable instructions can be downloaded over a network for execution.

In general, according to some implementations, survey data corresponding to a subsurface region of interest is received. A wavefield is determined by iteratively performing until a specified condition is satisfied: selecting, for a current iteration based at least in part on a current residual representing an approximation error, an element that includes a representation of at least one portion of the wavefield, where the element is determined from the received survey data; computing, for the current iteration, a respective data structure from the selected element; orthogonally projecting the data structure onto a space spanned by a plurality of data structures including the computed data structure; and updating the current residual based at least in part on the orthogonal projection.

In general, according to further or other implementations, selecting the element comprises selecting an element from a dictionary of elements that represent respective portions of the wavefield corresponding to respective survey receiver locations.

In general, according to further or other implementations, computing the data structure comprises computing an orthonormal vector.

In general, according to further or other implementations, orthonormal vectors for respective iterations provide an orthonormal basis, the space being spanned by the orthonormal basis.

In general, according to further or other implementations, selecting the element is according to a criterion that reduces a residual for a next iteration.

In general, according to further or other implementations, determining the wavefield comprises determining a total wavefield.

In general, according to further or other implementations, determining the wavefield comprises determining an upgoing wavefield.

In general, according to further or other implementations, the specified condition includes the current residual being less than a predetermined threshold.

In general, according to further or other implementations, deghosting of the received survey data is performed using the determined wavefield.

In general, according to further or other implementations, interpolation to compute survey data at one or more interpolation points is performed using the determined wavefield.

In general, according to some implementations, a computer system includes a storage medium to store survey data corresponding to a subsurface region of interest, and at least one processor configured to iteratively determine a wavefield, based at least in part on the survey data, by performing orthogonal matching pursuits.

In general, according to further or other implementations, performing the orthogonal matching pursuits comprises performing an iterative process comprising: selecting, for a current iteration based at least in part on a current residual representing an approximation error, a dictionary element that includes a representation of at least one portion of the wavefield, where the dictionary element is determined from the received survey data; computing, for the current iteration, a respective orthonormal vector from the selected dictionary element; orthogonally projecting the orthonormal vector onto a space spanned by a plurality of orthonormal vectors; and updating the current residual based at least in part on the orthogonal projection.

In general, according to further or other implementations, the iterative process stops upon the current residual satisfying a specified condition.

In general, according to further or other implementations, the at least one processor is configured to further perform deghosting and crossline interpolation using the determined wavefield.

In general, according to further or other implementations, the at least one processor is configured to compute a total wavefield derived from a weighted aggregate of the orthonormal vectors computed for respective iterations of the iterative process.

In general, according to further or other implementations, the weighted aggregate includes a weighted sum of products of coefficients and the orthonormal vectors, wherein the coefficients are computed by the orthogonal projecting of the orthonormal vector onto the space spanned by the plurality of orthonormal vectors.

In general, according to further or other implementations, the dictionary elements are based at least in part on products of ghost operators and values derived from the survey data, and wherein the at least one processor is configured to compute an upgoing wavefield from the total wavefield by omitting the ghost operators.

In general, according to further or other implementations, selecting the dictionary element is according to a criterion that reduces a residual for a next iteration.

In general, according to some implementations, an article comprising at least one non-transitory machine-readable storage medium stores instructions that upon execution cause a system to receive survey data corresponding to a subsurface region of interest, and determine a wavefield by iteratively performing until a specified condition is satisfied: selecting, for a current iteration based at least in part on a current residual representing an approximation error, an element that includes a representation of at least one portion of the wavefield, wherein the element is derived from the received survey data; computing, for the current iteration, a respective data structure from the selected element; orthogonally projecting the data structure onto a space spanned by a plurality of data structures including the computed data structure; and updating the current residual based at least in part on the orthogonal projection.

In the foregoing description, numerous details are set forth to provide an understanding of the subject disclosed herein. However, implementations may be practiced without some of these details. Other implementations may include modifications and variations from the details discussed above. It is intended that the appended claims cover such modifications and variations.

**Claims**

1. A computer-implemented method comprising:

   receiving (302) survey data corresponding to a subsurface region of interest;
   determining (304) a wavefield by iteratively performing an orthogonal generalized matching pursuits technique until a specified condition is satisfied:

   selecting (306), for a current iteration based at least in part on a current residual representing an approximation error, a dictionary element ($d_j$) that includes a representation of at least one portion of the wavefield, wherein the dictionary element is constructed out of the product of a complex exponential function and a ghost operator;
   computing (308), for the current iteration, a respective orthonormal vector based on the selected dictionary element, wherein if the current iteration is after a first iteration the respective orthonormal vector is computed further based on an orthonormal vector computed in a previous iteration before the current iteration;
   orthogonally projecting (310) the orthonormal vector onto a space spanned by a plurality of orthonormal vectors including the computed orthonormal vector, wherein the computed orthonormal vector is orthogonal to other orthonormal vectors of the plurality of orthonormal vectors; and
   updating (312) the current residual based at least in part on the orthogonal projection.

2. The method of claim 1, wherein selecting the dictionary element comprises selecting the dictionary element from a dictionary of elements that represent respective portions of the wavefield corresponding to respective survey receiver locations.

3. The method of claim 1, wherein selecting the dictionary element is according to a criterion that reduces a residual for a next iteration.

4. The method of claim 1, wherein determining the wavefield comprises determining a total wavefield.

5. The method of claim 1, wherein determining the wavefield comprises determining an upgoing wavefield.

6. The method of claim 1, wherein the specified condition includes the current residual being less than a predetermined threshold.

7. The method of claim 1, further comprising performing deghosting of the received survey data using the determined wavefield.

8. The method of claim 1, further comprising performing interpolation to compute survey data at one or more interpolation points, using the determined wavefield.

9. A computer system comprising:

   a storage medium to store survey data corresponding to a subsurface region of interest; and
   at least one processor configured to perform the method as described in anyone of claims 1-8.

10. An article comprising at least one non-transitory machine-readable storage medium storing instructions that upon execution cause a computer system to carry out the method of any of claims 1-8.

11. The article of claim 10, wherein the instructions upon execution cause the system to further perform deghosting or crossline interpolation using the determined wavefield.


**Patentansprüche**

1. Rechnerimplementiertes Verfahren, das umfasst:

   Empfangen (302) von Vermessungsdaten, die einem interessierenden Untergrundbereich entsprechen;
   Ermitteln (304) eines Wellenfeldes durch iteratives Durchführen einer Orthogonal-Generalized-Matching-Pursuit-Technik, bis eine spezifizierte Bedingung erfüllt ist:

Auswählen (306), für eine aktuelle Iteration, die wenigstens teilweise auf einem aktuellen Residuum basiert, das einen Näherungsfehler darstellt, eines Dictionary-Elements ($d_j$), das eine Darstellung von wenigstens einem Teil des Wellenfeldes umfasst, wobei das Dictionary-Element aus dem Produkt einer komplexen Exponentialfunktion und einem Geistoperator aufgebaut ist;
Berechnen (308), für die aktuelle Iteration, eines jeweiligen Orthonormalvektors basierend auf dem ausgewählten Dictionary-Element, wobei, falls die aktuelle Iteration nach einer ersten Iteration stattfindet, der jeweilige Orthonormalvektor weiter basierend auf einem in einer vorhergehenden Iteration vor der aktuellen Iteration berechneten Orthonormalvektor berechnet wird;
orthogonales Projizieren (310) des Orthonormalvektors auf einen von mehreren Orthonormalvektoren, einschließlich dem berechneten Orthonormalvektor, aufgespannten Raum, wobei der berechnete Orthonormalvektor zu anderen Orthonormalvektoren der mehreren Orthonormalvektoren orthogonal ist; und
Aktualisieren (312) des aktuellen Residuums basierend wenigstens teilweise auf der orthogonalen Projektion.

2. Verfahren nach Anspruch 1, wobei das Auswählen des Dictionary-Elements ein Auswählen des Dictionary-Elements aus einem Dictionary von Elementen umfasst, die jeweilige Abschnitte des Wellenfeldes darstellen, welche jeweiligen Vermessungsempfängerorten entsprechen.

3. Verfahren nach Anspruch 1, wobei das Auswählen des Dictionary-Elements gemäß einem Kriterium stattfindet, das ein Residuum für eine nächste Iteration reduziert.

4. Verfahren nach Anspruch 1, wobei das Bestimmen des Wellenfeldes ein Bestimmen eines gesamten Wellenfeldes umfasst.

5. Verfahren nach Anspruch 1, wobei das Bestimmen des Wellenfeldes ein Bestimmen eines herauflaufenden Wellenfeldes umfasst.

6. Verfahren nach Anspruch 1, wobei die spezifizierte Bedingung umfasst, dass das aktuelle Residuum kleiner als ein vorbestimmter Schwellenwert ist.

7. Verfahren nach Anspruch 1, das ferner ein Durchführen eines Deghosting der empfangenen Vermessungsdaten unter Verwendung des bestimmten Wellenfeldes umfasst.

8. Verfahren nach Anspruch 1, das ferner ein Durchführen einer Interpolation zum Berechnen von Vermessungsdaten an einem oder mehreren Interpolationspunkten unter Verwendung des bestimmten Wellenfeldes umfasst.

9. Computersystem, das umfasst:

ein Speichermedium zum Speichern von Vermessungsdaten, die einem interessierenden Untergrundbereich entsprechen; und
wenigstens einen Prozessor, der zum Durchführen des in einem der Ansprüche 1-8 beschriebenen Verfahren ausgelegt ist.

10. Artikel, der wenigstens ein nichtflüchtiges maschinenlesbares Speichermedium umfasst, das Befehle speichert, die bei deren Ausführung bewirken, dass ein Computersystem das Verfahren nach einem der Ansprüche 1-8 ausführt.

11. Artikel nach Anspruch 10, wobei die Befehle bei deren Ausführung bewirken, dass das System ferner ein Deghosting oder eine Crossline-Interpolation unter Verwendung des bestimmten Wellenfeldes durchführt.

**Revendications**

1. Procédé mis en oeuvre par ordinateur, consistant à :

recevoir (302) des données de levé correspondant à une région d'intérêt sous la surface ;
déterminer (304) un champ d'ondes par réalisation itérative d'une technique de mise en correspondance généralisée orthogonale jusqu'à ce qu'une condition spécifiée soit satisfaite :

sélectionner (306), pour une itération courante sur la base, au moins en partie, d'un résidu courant représentant une erreur d'approximation, un élément de dictionnaire (dj) qui comprend une représentation d'au moins une partie du champ d'ondes, l'élément de dictionnaire étant construit à partir du produit d'une fonction exponentielle complexe et d'un opérateur fantôme ;

calculer (308), pour l'itération courante, un vecteur orthonormé respectif sur la base de l'élément de dictionnaire sélectionné, dans lequel, si l'itération courante est après une première itération, le vecteur orthonormé respectif est calculé en outre sur la base d'un vecteur orthonormé calculé dans une itération précédente avant l'itération courante ;

procéder à la projection orthogonale (310) du vecteur orthonormé sur un espace défini par une pluralité de vecteurs orthonormés comprenant le vecteur orthonormé calculé, le vecteur orthonormé calculé étant orthogonal à d'autres vecteurs orthonormés de la pluralité de vecteurs orthonormés ; et

mettre à jour (312) le résidu courant sur la base, au moins en partie, de la projection orthogonale.

2. Procédé selon la revendication 1, dans lequel la sélection de l'élément de dictionnaire comprend la sélection de l'élément de dictionnaire à partir d'un dictionnaire d'éléments qui représentent des parties respectives du champ d'ondes correspondant à des emplacements de récepteur de levé respectifs.

3. Procédé selon la revendication 1, dans lequel la sélection de l'élément de dictionnaire est conforme à un critère qui réduit le résidu pour une itération suivante.

4. Procédé selon la revendication 1, dans lequel la détermination du champ d'ondes comprend la détermination d'un champ d'ondes total.

5. Procédé selon la revendication 1, dans lequel la détermination du champ d'ondes comprend la détermination d'un champ d'ondes ascendant.

6. Procédé selon la revendication 1, dans lequel la condition spécifiée comprend le résidu courant étant inférieur à un seuil prédéterminé.

7. Procédé selon la revendication 1, comprenant en outre la réalisation de l'enlèvement des images fantômes des données de levé reçues à l'aide du champ d'ondes déterminé.

8. Procédé selon la revendication 1, comprenant en outre l'exécution d'une interpolation pour calculer les données de levé à un ou plusieurs points d'interpolation, à l'aide du champ d'ondes déterminé.

9. Système informatique comprenant :

un support de stockage pour stocker les données de levé correspondant à une région souterraine d'intérêt ; et
au moins un processeur configuré pour mettre en oeuvre le procédé tel que décrit dans n'importe laquelle des revendications 1 à 8.

10. Article comprenant au moins un support de stockage lisible par machine non transitoire stockant les instructions qui, lors de l'exécution, amènent le système informatique à mettre en oeuvre le procédé selon l'une quelconque des revendications 1 à 8.

11. Article selon la revendication 10, dans lequel les instructions, lors de l'exécution, amènent le système à effectuer en outre un enlèvement des images fantômes ou une interpolation croisée à l'aide du champ d'ondes déterminé.

FIG. 1

y ↑

x ←|

204     204     204     204

100

} 202

## FIG. 2

---

WAVEFIELD ESTIMATION PROCESS ⎯300

RECEIVE SURVEY DATA ACQUIRED BY SURVEY RECEIVERS, WHERE THE SURVEY DATA CORRESPONDS TO A SUBSURFACE REGION OF INTEREST ⎯302

CONTINUE UNTIL SPECIFIED CONDITION SATISFIED

DETERMINE A TARGET WAVEFIELD USING AN ITERATIVE PROCESS

SELECT, FOR A CURRENT ITERATION BASED AT LEAST IN PART ON A CURRENT RESIDUAL, A DICTIONARY ELEMENT ⎯306

COMPUTE, FOR THE CURRENT ITERATION A ORTHONORMAL VECTOR FROM THE SELECTED DICTIONARY ELEMENT ⎯308 ⎯304

ORTHOGONALLY PROJECT THE ORTHONORMAL VECTOR ONTO A SPACE SPANNED BY AN ORTHONORMAL BASIS ⎯310

UPDATE CURRENT RESIDUAL BASED AT LEAST IN PART ON THE ORTHOGONAL PROJECTION ⎯312

DERIVE TOTAL WAVEFIELD AND DERIVE TARGET WAVEFIELD ⎯314

## FIG. 3

130

CONTROL SYSTEM

402 —

DEGHOSTING
MODULE

410

404 —

PROCESSOR

NETWORK
INTERFACE

MEASUREMENT
DATA —408

—406

STORAGE MEDIA

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100186950 A

**Non-patent literature cited in the description**

- **Y HOLLANDER et al.** *Seismic Data Interpolation by Orthogonal Matching Pursuit,* 2012
- **JOEL A TROPP et al.** *Single Recovery from Random Measurements Via Orthogonal Matching Pursuit,* 2007